# EUROPEAN PATENT APPLICATION

(11) **EP 4 566 811 A1**
(43) Date of publication of application: **11.06.2025**
(21) Application number: 24217542.0
(22) Date of filing: 04.12.2024
(51) Int. Cl.: B32B 7/12, B32B 15/08, B32B 15/20, B32B 27/08, B32B 27/10, B32B 27/32, B32B 27/34, B32B 27/36

(54) **DRUG NON-ABSORPTIVE FILM**

(30) Priority: 04.12.2023 US 202363605655 P
(71) Applicant: Winpak Ltd., Winnipeg, MB R3J 3T3 (CA)
(72) Inventor: DARTIAILH,, Christopher Neil Bergman, Winnipeg (CA); CIPRIANO,, Antonio Jose, Winnipeg (CA); KORKALA,, Juho Lauri, Winnipeg (CA); RAFEI,, Mehdi, Winnipeg (CA); ASMUNDSON,, Ronald, Winnipeg (CA)
(74) Representative: Potter Clarkson

(57) **Abstract**

A drug resistant film is provided. The drug resistant film includes a drug contact sealing layer, an aluminum foil layer, a biaxially oriented polyamide layer, and a paper layer. The drug contact layer is configured to contact a drug, such as lidocaine, nicotine, or fentanyl. The aluminum foil layer is affixed to the drug contact sealing layer via a first lamination adhesive. The biaxially oriented polyamide layer is affixed to the aluminum foil layer via a second lamination adhesive. The paper layer is affixed to the biaxially orientated polyamide layer via a third lamination adhesive. According to an example, the drug contact sealing layer comprises an extruded monolayer of COC, EVOH, or PETG. According to an example, the drug contact sealing layer is a coextruded layer comprising a plurality of sublayers.

## Description

### Field of the Disclosure

The present disclosure is directed generally to a drug resistant film.

### Background

Pharmaceutical packaging requires scalping-resistant materials. Scalping refers to the migration or absorption of a pharmaceutical drug into the packaging structure. Anti-scalping structures are generally provided on a drug-by-drug basis, as no generalized anti-scalping structures exist for a wide range of pharmaceutical drugs. Drug delivery patches providing pain relieving medication are often prescribed as a localized pain reliever. In other examples, the drug delivery patches may be used to provide other types of treatment, such as treatment for drug withdrawal. These drug delivery patches are stored in pouches which must be flexible to enable opening, as well as drug resistant to prevent scalping of the drug found in the patch.

### Summary of the Disclosure

All examples and features described below can be combined in any technically possible way.

Generally, in one aspect, a drug resistant film is provided. The drug resistant film includes a drug contact sealing layer configured to contact a drug.

The drug resistant film further includes an aluminum foil layer. The aluminum foil layer is affixed to the drug contact sealing layer via a first lamination adhesive.

The drug resistant film further includes a biaxially orientated polyamide layer. The biaxially oriented polyamide layer is affixed to the aluminum foil layer via a second lamination adhesive.

The drug resistant film further includes a paper layer. The paper layer is affixed to the biaxially orientated polyamide layer via a third lamination adhesive.

According to an example, the first lamination adhesive, the second lamination adhesive, and the third lamination adhesive may be solvent-based, water-based, or solventless.

According to an example, the biaxially orientated polyamide layer is formed via extrusion.

According to an example, the biaxially orientated polyamide layer has a thickness between approximately 10 and 50 microns.

According to an example, the aluminum foil layer has a thickness between 5 and 30 microns.

According to an example, the drug contact sealing layer has a thickness between 10 and 100 microns.

According to an example, the drug contact sealing layer comprises of one of extruded monolayer cyclic olefin copolymer (COC), extruded monolayer ethylene vinyl alcohol (EVOH), or extruded monolayer polyethylene terephthalate glycol (PETG).

According to an example, the drug contact sealing layer is a coextruded layer. The coextruded layer includes a first sublayer, a second sublayer, and a third sublayer. The second sublayer is arranged between the first sublayer and the third sublayer. The third sublayer is configured to contact the drug.

According to an example, the first sublayer comprises polyethylene.

According to an example, the second layer comprises COC.

According to an example, the third sublayer comprises of less than 90 percent of COC and greater than 10 percent of polyethylene and additives.

According to an example, the paper layer has a thickness of approximately 20 to 100 grams per square meter.

According to an example, the first lamination adhesive, the second lamination adhesive, and the third lamination adhesive have a thickness of approximately 2 to 3 grams per square meter.

According to an example, the drug contact sealing layer is a coextruded layer including a first sublayer, a second sublayer, a third sublayer, and a fourth sublayer. The fourth sublayer is configured to contact the drug. The first sublayer, the second sublayer, and the third sublayer may each include polyethylene, cyclic olefin copolymer (COC), or a blend of polyethylene and COC. The fourth sublayer may be made of less than 90 percent of cyclic olefin copolymer (COC) and greater than 10 percent of polyethylene and additives.

According to an example, the drug may be lidocaine, nicotine, or fentanyl.

Generally, in another aspect, a method for manufacturing a drug resistant film is provided. The method includes forming a drug contact sealing layer configured to contact a drug.

The method further includes affixing, via a first lamination adhesive, an aluminum foil layer to the drug contact sealing layer.

The method further includes affixing, via a second lamination adhesive, a biaxially orientated polyamide layer to the aluminum foil layer.

The method further includes affixing, via a third lamination adhesive, a paper layer to the biaxially orientated polyamide layer.

Generally, in another aspect, a drug resistant film is provided. The drug resistant film includes a drug contact sealing layer. The drug contact sealant layer is configured to contact a drug.

The drug resistant film further includes an aluminum foil layer. The aluminum foil layer is affixed to the drug contact sealing layer via a first lamination adhesive.

The drug resistant film further includes a biaxially orientated polyamide layer or a biaxially orientated polyethylene terephthalate (PET) layer. The biaxially oriented polyamide layer or the biaxially orientated PET layer is affixed to the aluminum foil layer via a second lamination adhesive.

Generally, in an even further aspect, a drug resistant film is provided. The drug resistant film includes a drug contact sealing layer. The drug contact sealing layer is configured to contact a drug.

The drug resistant film further includes an aluminum foil layer. The aluminum foil layer is affixed to the drug contact sealing layer via a first lamination adhesive.

The drug resistant film further includes a paper layer. The paper layer is affixed to the aluminum foil layer via a second lamination adhesive.

These and other aspects of the various embodiments will be apparent from and elucidated with reference to the embodiment(s) described hereinafter.

### Brief Description of the Drawings

In the drawings, like reference characters generally refer to the same parts throughout the different views. Also, the drawings are not necessarily to scale, emphasis instead generally being placed upon illustrating the principles of the various embodiments.
FIG. 1 is a front cross-sectional view of a drug resistant film, according to the present disclosure.
FIG. 2A is a front cross-sectional view of a drug resistant film having a coextruded drug contact sealing layer, according to the present disclosure.
FIG. 2B is a front cross-sectional view of a drug resistant film having a further example of a coextruded drug contact sealing layer, according to the present disclosure.
FIG. 3 is a front cross-sectional view of another example of a drug resistant film, according to the present disclosure.
FIG. 4 is a front cross-sectional view of another example of a drug resistant film, according to the present disclosure.
FIG. 5 is a front cross-sectional view of another example of a drug resistant film, according to the present disclosure.
FIG. 6 illustrates a pharmaceutical product arranged in a pouch, according to the present disclosure.
FIG. 7 is a flow chart of the steps of a method for manufacturing a drug resistant film, according to the present disclosure.

### Detailed Description of Embodiments

The present disclosure provides an anti-scalping, drug resistant film for packaging patches or other pharmaceutical products having drugs such as lidocaine, nicotine, and fentanyl. The drug resistant film includes a drug contact sealing layer adhesively laminated to an aluminum foil layer to prevent drug absorption or permeation, with additional layers being affixed to the aluminum foil layer for strength and support. The additional layers may also provide a printing substrate. In some examples, the drug resistant film forms a pouch surrounding a pharmaceutical product containing the drug, such as a transdermal drug delivery patch. The drug resistant film prevents the drug of the pharmaceutical product from breaching the pouch. The pouch may be formed by heat-sealing the drug resistant film.

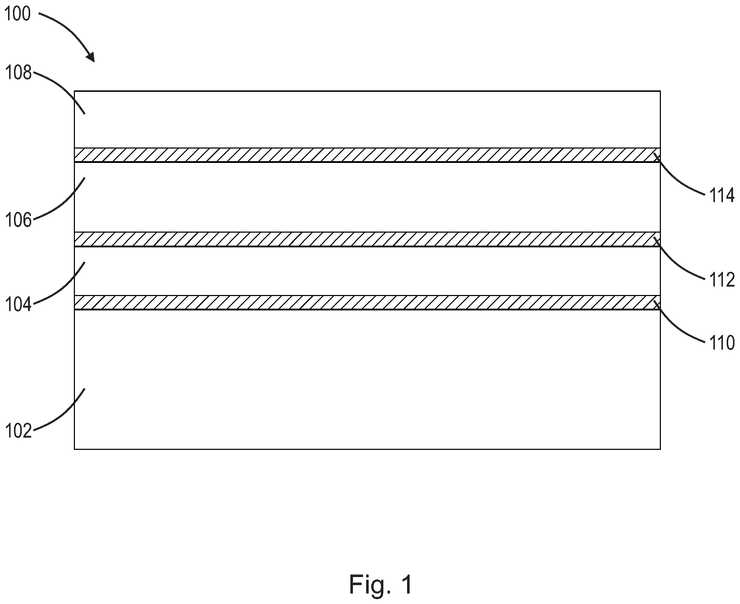

Transitioning now to the figures, FIG. 1 illustrates a front cross-sectional view of a drug resistant film 100. The drug resistant film 100 may form a pouch or other variety of package to contain a pharmaceutical product to deliver a drug to a patient. In some examples, the pharmaceutical product could be a transdermal delivery patch configured to deliver a drug such as lidocaine, nicotine, or fentanyl. Broadly, the drug resistant film 100 includes a drug contact sealing layer 102, an aluminum foil layer 104, a biaxially oriented polyamide layer 106, and a paper layer 108. In some examples, one or more the aforementioned layers may be formed from two or more identical sublayers, thus functioning as a single layer. The drug contact sealing layer 102 is configured to contact the drug when the pharmaceutical product is arranged within the pouch or package. In some examples, the drug contact sealing layer 102 may be referred to as a drug contact layer or contact layer. Further, in some non-limiting examples, the drug resistant film 100 may be configured to fold such that the drug contact sealing layer 102 may be heat sealed to itself to form a pouch 500. Alternatively, in other non-limiting examples, the pouch 500 may be formed by heat sealing the drug contact sealing layers 102 of two drug resistant films 100. Three sides of two rectangular drug resistant films 100 may be sealed together to form a three-sided seal. The drug contact sealing layer 102 is configured to prevent the drug resistant film 100 from absorbing the drug carried by the pharmaceutical product.

In one example, the drug contact sealing layer 102 may be an extruded monolayer of cyclic olefin copolymer (COC). In a non-limiting example, the extruded monolayer of COC may range in thickness from 25 to 50 microns. COC may also be referred to as norbornene copolymer or ethylene-norbornene copolymer. In other examples, the drug contact sealing layer 102 may be an extruded monolayer of ethylene vinyl alcohol (EVOH). EVOH may also be referred to as ethylene vinyl alcohol copolymer. In other examples, the drug contact sealing layer 102 may be an extruded monolayer of polyethylene terephthalate glycol (PETG). PETG is a type of polyester.

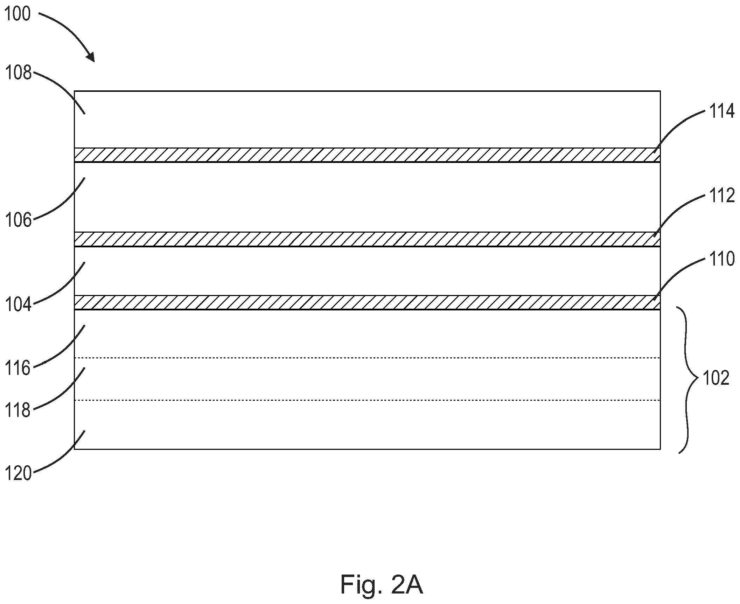

In further examples, the drug contact sealing layer 102 may be a coextruded layer comprising two or more sublayers. In some examples, the coextruded layer may have a thickness of between 10 and 100 microns. An example of such a coextruded layer is illustrated in FIG. 2A. FIG. 2A shows a coextruded layer with a first, a second, and a third sublayer 116, 118, 120. In one example, the first sublayer 116 may be polyethylene and the second sublayer 118 may be COC. Further to this example, the third sublayer 120 may be a blend of COC, polyethylene, and additives. For example, the third sublayer 120 may be less than 90 percent COC and more than 10 percent of polyethylene and additives. In some examples, the third sublayer 120 may be between 50 and 89 percent COC. In use, the third sublayer 120 is arranged to contact the drug (such as lidocaine), while the second sublayer 118 is arranged between the first sublayer 116 and the third sublayer 120. In this example, the third sublayer 120 provides a primary drug barrier, while the second sublayer 118 provides a secondary drug barrier.

FIG. 1 further illustrates an aluminum foil layer 104 affixed to the drug contact sealing layer 102 via a first lamination adhesive 110. Generally, the aluminum foil layer 104 may have a thickness between 5 and 30 microns. The first lamination adhesive 110 may be any appropriate solvent-based, water-based, or solventless adhesive. As can be seen in the example of FIG. 2A, the first lamination adhesive 110 affixes the aluminum foil layer 104 to the first sublayer 116 of the coextruded drug contact sealing layer 102. Notably, of the coextruded drug contact sealing layer 102, an adhesive tie layer is not required to affix the first sublayer 116 of the coextruded drug contact sealing layer to the aluminum foil layer 104. The first lamination adhesive 110 may be approximately 2 to 3 grams per square meter thick.

FIG. 1 further illustrates a biaxially orientated polyamide layer 106 affixed to the aluminum foil layer 104 via a second lamination adhesive 112. Generally, the biaxially oriented polyamide layer 106 may be any appropriate thickness. In one non-limiting example, the biaxially orientated polyamide layer 106 may have a thickness of approximately 10 to 50 microns. The second lamination adhesive 112 may be approximately 2 to 3 grams per square meter thick. In some examples, the second lamination adhesive 112 is approximately 2 to 3 grams per square meter thick. In some examples, biaxially oriented polyamide may be referred to as polyamide, oriented polyamide, or nylon. The biaxially oriented polyamide layer 106 may be formed via cast extrusion, blown extrusion, double bubble extrusion, or triple bubble extrusion followed by mono or biaxial orientation. If the biaxially oriented polyamide layer 106 is formed via cast or blown extrusion, the biaxially oriented polyamide layer 106 may include polyamide copolymers.

FIG. 1 further illustrates a paper layer 108 affixed to the biaxially orientated polyamide layer 106 via a third lamination adhesive 114. The paper layer 108 is arranged at the exterior of the pouch or package formed by the drug resistant film 100. Generally, the paper layer 108 may be any appropriate thickness. In one non-limiting example, the paper layer 108 may have a thickness of approximately 20 to 100 grams per square meter. The third lamination adhesive 114 may be approximately 2 to 3 grams per square meter thick. The paper layer 108 may be configured as a printing substrate enabling a manufacturer to provide information regarding the drug, the transdermal patch carrying the drug, or any other relevant subject matter.

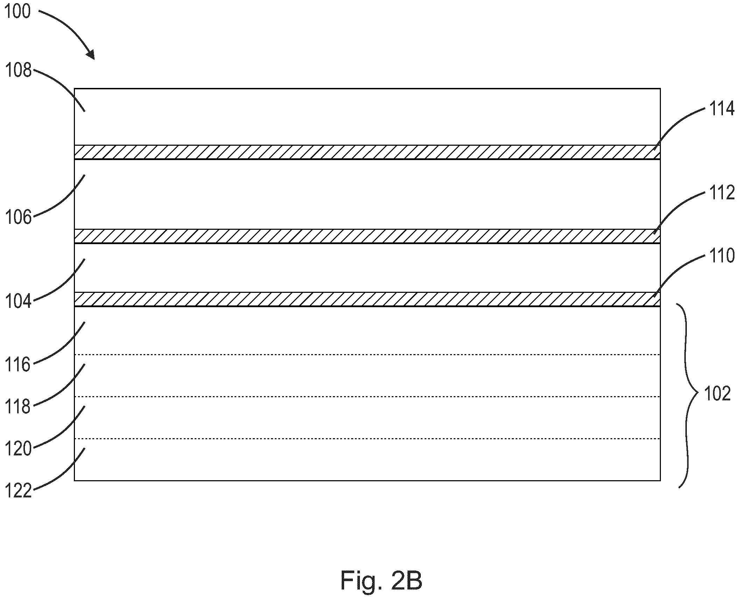

FIG. 2B illustrates a further variation of the drug resistant film 100 having a coextruded the drug contact sealing layer 102 of FIG. 2A. In the example of FIG. 2B, the coextruded drug contact sealing layer 102 includes four sublayers and may be manufactured via blown coextrusion. The coextruded drug contact sealing layer 102 may have a thickness between 10 and 100 microns. The first sublayer 116 shown in FIG. 2B may be a lamination contact layer arranged to adhere to the aluminum foil layer 104 via the first lamination adhesive 110. The first sublayer 116 may be made of 100 percent COC, 100 percent polyethylene, or a blend of COC and polyethylene.

The second sublayer 118 shown in FIG. 2B may be a bulk layer. The second sublayer 118 may be made of a blend of COC and polyethylene where the second sublayer 118 has a COC content of 30 percent or less. In some examples, the second sublayer 118 may be 100 percent polyethylene.

The third sublayer 120 shown in FIG. 2B may be a sub skin layer. The third sublayer 120 may be made of a blend of COC and polyethylene where the third sublayer 120 has a COC content of 80 percent or more. In some examples, the third sublayer 120 may be 100 percent COC.

The fourth sublayer 122 shown in FIG. 2B may be a drug contact layer. The fourth sublayer 122 may be made of a blend of COC and polyethylene where the fourth sublayer 122 has a COC contact ranging from 50 to 89 percent.

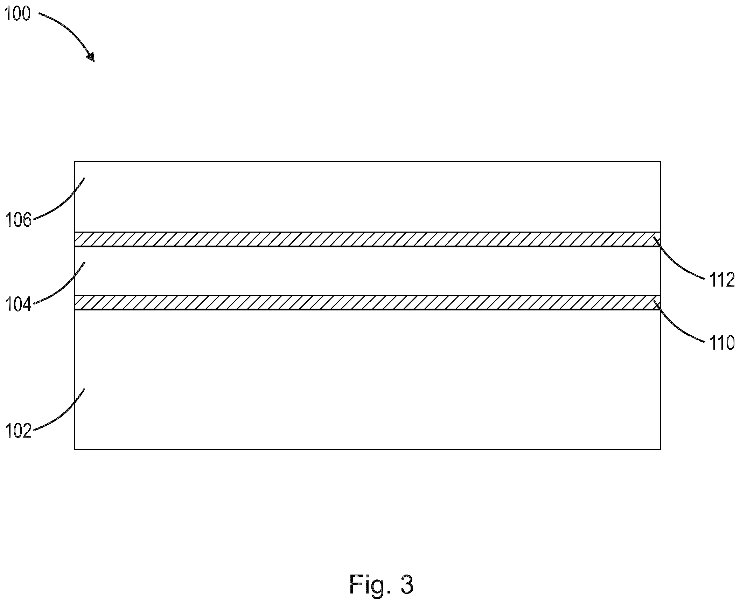

FIG. 3 illustrates a variation of the drug resistant film 100 of FIG. 1. In FIG. 3, the paper layer 108 is omitted, resulting in the biaxially oriented polyamide layer 106 being the exterior layer of the drug resistant film 100.

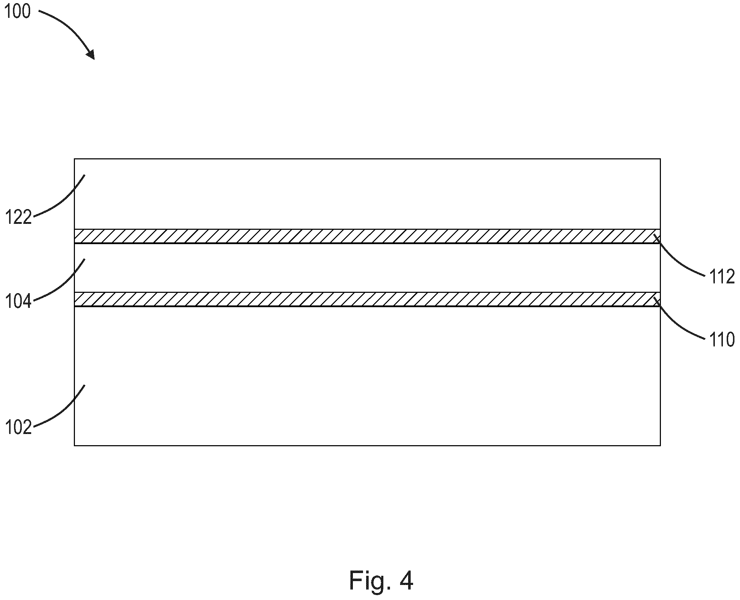

FIG. 4 illustrates a variation of the drug resistant film 100 of FIG. 3. In FIG. 4, the exterior biaxially oriented polyamide layer 106 has been replaced with a biaxially oriented polyethylene terephthalate (PET) layer 122. The biaxially oriented PET layer 122 is affixed to the aluminum foil layer 104 via the second lamination adhesive 112.

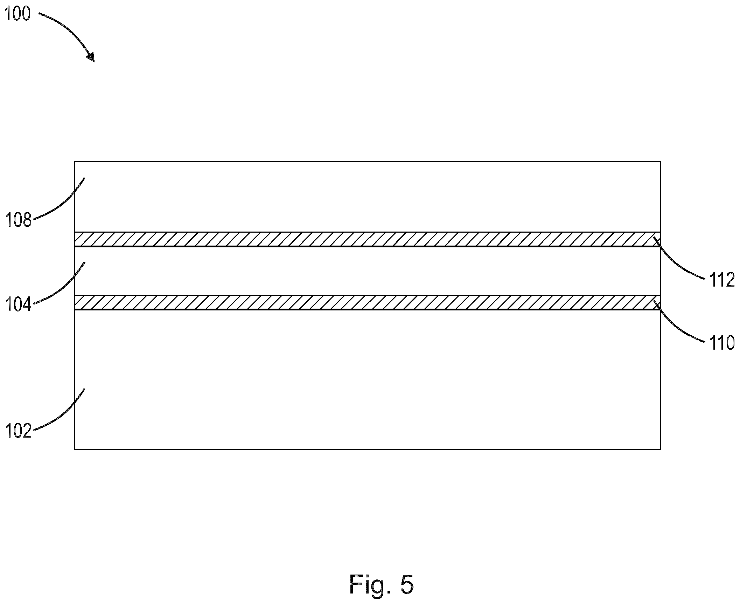

FIG. 5 illustrates a variation of the drug resistant film 100 of FIG. 4. In FIG. 5, the exterior biaxially oriented PET layer 122 has been replaced with the paper layer 108. The paper layer 108 is affixed to the aluminum foil layer 104 via the second lamination adhesive 112.

In further examples, the drug contact layer 102 and the aluminum foil layer 104 may be affixed to any other individual or combination of additional layers to provide additional strength and support to the drug resistant film 100. In some examples, the exterior layer, such as a paper layer, a polyamide layer, a PET layer, etc., may be configured as a printing substrate.

Tables 1-4 below describe examples of drug resistant films.

Table 1 describes a first example of the drug resistant film 100 corresponding to FIG. 1. An interior drug contact sealing layer 102 is extruded as a monolayer of COC. An aluminum foil layer 104 is affixed to the drug contact sealing layer 102 via the first lamination adhesive 110. A biaxially orientated polyamide layer 106 is affixed to the aluminum foil layer 104 via the second lamination adhesive 112. The biaxially oriented polyamide layer 106 is formed via cast extrusion and biaxial orientation. The exterior paper layer 108 is affixed to the biaxially orientated polyamide layer 106 via the third lamination adhesive 114. The first, second, and third lamination adhesives 110, 112, 114 are solvent based and have thicknesses between 2 and 3 grams per meter squared.

**TABLE 1**

| LAYER | PRODUCTION |
|---|---|
| PAPER | PAPER MILL |
| LAMINATION ADHESIVE | SOLVENT BASED ADHESIVE LAMINATION |
| BIAXIALLY ORIENTED POLYAMIDE | CAST EXTRUSION AND BIAXIAL ORIENTATION |
| LAMINATION ADHESIVE | SOLVENT BASED ADHESIVE LAMINATION |
| ALUMINUM FOIL | |
| LAMINATION ADHESIVE | SOLVENT BASED ADHESIVE LAMINATION |
| DRUG CONTACT SEALING LAYER | EXTRUDED 100% MONOLAYER COC |

Table 2 describes a second example of the drug resistant film 100 corresponding to FIG. 1. The second example of the drug resistant film 100 differs from the first example in that the drug contact sealing layer 102 is extruded as a monolayer of EVOH.

**TABLE 2**

| LAYER | PRODUCTION |
|---|---|
| PAPER | PAPER MILL |
| LAMINATION ADHESIVE | SOLVENT BASED ADHESIVE LAMINATION |
| BIAXIALLY ORIENTED POLYAMIDE | CAST EXTRUSION AND BIAXIAL ORIENTATION |
| LAMINATION ADHESIVE | SOLVENT BASED ADHESIVE LAMINATION |
| ALUMINUM FOIL | |
| LAMINATION ADHESIVE | SOLVENT BASED ADHESIVE LAMINATION |
| DRUG CONTACT SEALING LAYER | EXTRUDED 100% MONOLAYER EVOH |

Table 3 describes a third example of the drug resistant film 100 corresponding to FIG. 1. The third example of the drug resistant film 100 differs from the previous examples in that the drug contact sealing layer 102 is extruded as a monolayer of PETG.

**TABLE 3**

| LAYER | PRODUCTION |
|---|---|
| PAPER | PAPER MILL |
| LAMINATION ADHESIVE | SOLVENT BASED ADHESIVE LAMINATION |
| BIAXIALLY ORIENTED POLYAMIDE | CAST EXTRUSION AND BIAXIAL ORIENTATION |
| LAMINATION ADHESIVE | SOLVENT BASED ADHESIVE LAMINATION |
| ALUMINUM FOIL | |
| LAMINATION ADHESIVE | SOLVENT BASED ADHESIVE LAMINATION |
| DRUG CONTACT SEALING LAYER | EXTRUDED 100% MONOLAYER PETG |

Table 4 describes a fourth example of the drug resistant film 100 corresponding to FIG. 2A. The fourth example of the drug resistant film 100 differs from the previous examples in that the drug contact sealing layer 102 is blown coextruded with three sublayers 116, 118, 120. The first sublayer 116 is polyethylene. The first sublayer 116 is affixed to the aluminum foil layer 104 via the first lamination adhesive 110. The second sublayer 118 is COC and is arrange between the first sublayer 116 and the third sublayer 120. The third sublayer 120 is 89 percent COC and 11 percent polyethylene and additives. The third sublayer 120 is arranged on the interior of the drug resistant film 100 such that it will contact the drug. As noted in Table 4, an adhesive tie layer is not required to affix the first sublayer 116 of the coextruded drug contact sealing layer to the aluminum foil layer 104.

**TABLE 4**

| LAYER | PRODUCTION |
|---|---|
| PAPER | PAPER MILL |
| LAMINATION ADHESIVE | SOLVENT BASED ADHESIVE LAMINATION |
| BIAXIALLY ORIENTED POLYAMIDE | CAST EXTRUSION AND BIAXIAL ORIENTATION |
| LAMINATION ADHESIVE | SOLVENT BASED ADHESIVE LAMINATION |
| ALUMINUM FOIL | |
| LAMINATION ADHESIVE | SOLVENT BASED ADHESIVE LAMINATION |
| DRUG CONTACT SEALING LAYER | BLOW CO-EXTRUDED PE/COC/89%COC+11% POLYETHYLENE AND ADDITIVES (NO USE OF TIE LAYERS TO ATTACH COEXTRUDED LAYER TO THE ALUMINUM) |

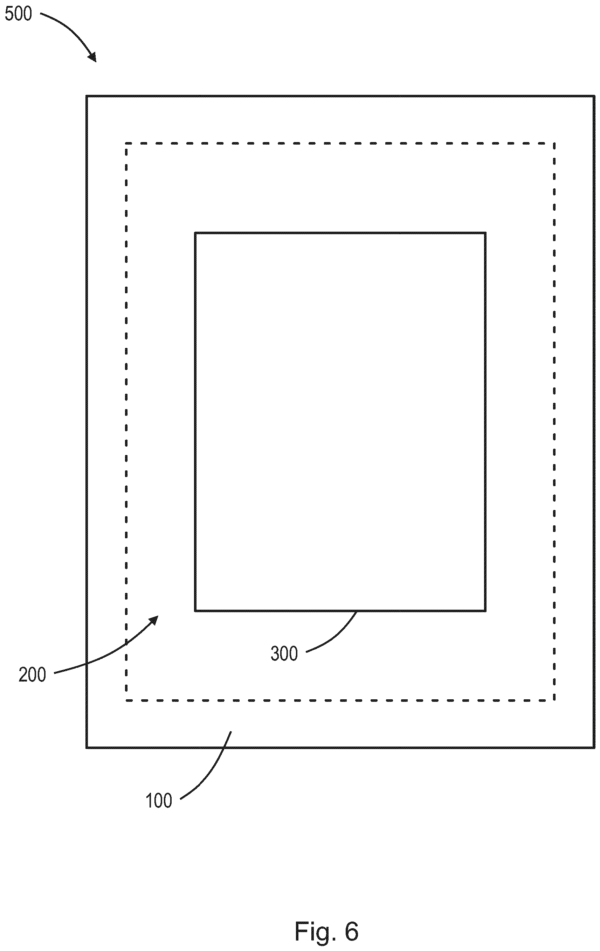

FIG. 6 illustrates a non-limiting example of a pharmaceutical product 300 arranged in a pouch 500. In the example of FIG. 6, the packaged pharmaceutical product 300 is a transdermal patch enclosed by the pouch 500. The pouch 500 may be formed by a heat-sealed drug resistant film 100. The transdermal patch 300 may carry a drug, such as lidocaine. The pouch 500 may be formed by heat sealing two drug resistant films 100 together to create a sealed interior volume 200. The dashed lines in FIG. 6 represent the boundaries of a sealed interior volume 200 which contains the transdermal patch 300. In some examples, one of the sides of the pouch 500 may be left unsealed, forming a three-sided seal.

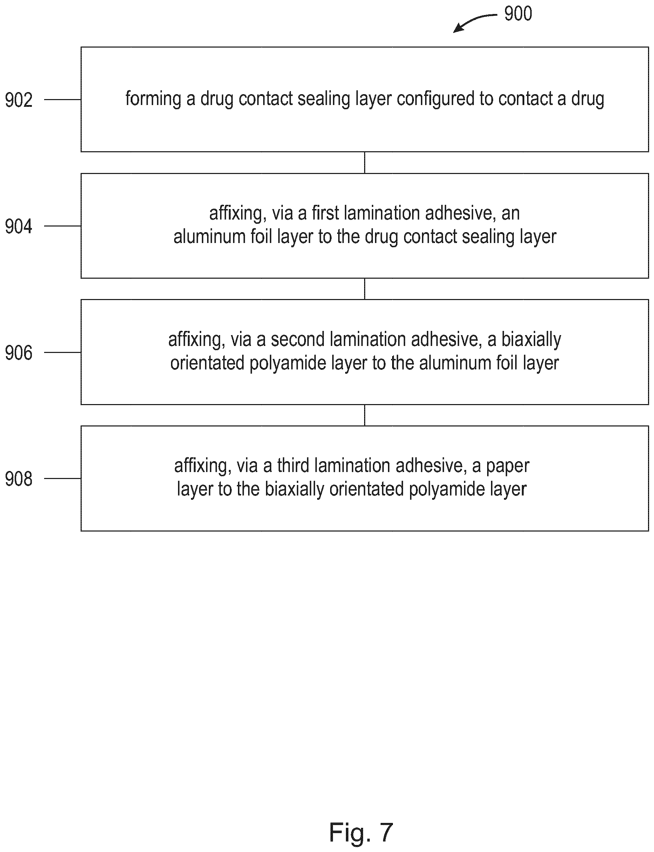

FIG. 7 is a flowchart for a method 900 for manufacturing a drug resistant film 100. With reference to FIGS. 1-7, the method 900 includes, in step 902, forming a drug contact sealing layer 102 configured to contact a drug.

The method 900 further includes, in step 904, affixing, via a first lamination adhesive 110, an aluminum foil layer 104 to the drug contact sealing layer 102.

The method 900 further includes, in step 906, affixing, via a second lamination adhesive 112, a biaxially orientated polyamide layer 106 to the aluminum foil layer 104.

The method 900 further includes, in step 908, affixing, via a third lamination adhesive 114, a paper layer 108 to the biaxially orientated polyamide layer 106.

All definitions, as defined and used herein, should be understood to control over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

It should also be understood that, unless clearly indicated to the contrary, in any methods claimed herein that include more than one step or act, the order of the steps or acts of the method is not necessarily limited to the order in which the steps or acts of the method are recited.

In the claims, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

## Claims

1. A drug resistant film, comprising:
a drug contact sealing layer configured to contact a drug;
an aluminum foil layer affixed to the drug contact sealing layer via a first lamination adhesive;
a biaxially orientated polyamide layer affixed to the aluminum foil layer via a second lamination adhesive; and
a paper layer affixed to the biaxially orientated polyamide layer via a third lamination adhesive.

2. The drug resistant film of claim 1, wherein the first lamination adhesive, the second lamination adhesive, and the third lamination adhesive are solvent-based, water-based, or solventless.

3. The drug resistant film of claim 1, wherein the biaxially orientated polyamide layer is formed via extrusion.

4. The drug resistant film of claim 1, wherein the biaxially orientated polyamide layer has a thickness between approximately 10 and 50 microns, wherein the aluminum foil layer has a thickness between approximately 5 and 30 microns, and wherein the drug contact sealing layer has a thickness between approximately 10 and 100 microns.

5. The drug resistant film of claim 1, wherein the drug contact sealing layer comprises of one of extruded monolayer cyclic olefin copolymer (COC), extruded monolayer ethylene vinyl alcohol (EVOH), or extruded monolayer polyethylene terephthalate glycol (PETG).

6. The drug resistant film of claim 1, wherein the drug contact sealing layer is a coextruded layer comprising a first sublayer, a second sublayer, and a third sublayer, wherein the second sublayer is arranged between the first sublayer and the third sublayer, and wherein the third sublayer is configured to contact the drug.

7. The drug resistant film of claim 6, wherein the first sublayer comprises polyethylene, wherein the second sublayer comprises cyclic olefin copolymer (COC), and wherein the third sublayer comprises of less than 90 percent of COC and greater than 10 percent of polyethylene and additives.

8. The drug resistant film of claim 6, wherein the first sublayer, the second sublayer, and the third sublayer each comprise polyethylene, cyclic olefin copolymer (COC), or a blend of polyethylene and COC.

9. The drug resistant film of claim 1, wherein the paper layer has a thickness of approximately 20 to 100 grams per square meter.

10. The drug resistant film of claim 1, wherein the first lamination adhesive, the second lamination adhesive, and the third lamination adhesive have a thickness of approximately 2 to 3 grams per square meter.

11. The drug resistant film of claim 1, wherein the drug contact sealing layer is a coextruded layer comprising a first sublayer, a second sublayer, a third sublayer, and a fourth sublayer, wherein the fourth sublayer is configured to contact the drug, and wherein the fourth sublayer comprises of less than 90 percent of cyclic olefin copolymer (COC) and greater than 10 percent of polyethylene and additives.

12. The drug resistant film of claim 1, wherein the drug is lidocaine, nicotine, or fentanyl.

13. A method for manufacturing a drug resistant film, comprising:
forming a drug contact sealing layer configured to contact a drug;
affixing, via a first lamination adhesive, an aluminum foil layer to the drug contact sealing layer;
affixing, via a second lamination adhesive, a biaxially orientated polyamide layer to the aluminum foil layer; and
affixing, via a third lamination adhesive, a paper layer to the biaxially orientated polyamide layer.

14. A drug resistant film, comprising:
a drug contact sealing layer configured to contact a drug;
an aluminum foil layer affixed to the drug contact sealing layer via a first lamination adhesive; and
a biaxially orientated polyamide layer or a biaxially orientated polyethylene terephthalate (PET) layer affixed to the aluminum foil layer via a second lamination adhesive.

15. A drug resistant film, comprising:
a drug contact sealing layer configured to contact a drug;
an aluminum foil layer affixed to the drug contact sealing layer via a first lamination adhesive; and
a biaxially orientated polyethylene terephthalate (PET) layer affixed to the aluminum foil layer via a second lamination adhesive.
